Europäisches Patentamt

(19) European Patent Office

Office européen des brevets

(11) Numéro de publication : **0 279 761 B1**

## (12) FASCICULE DE BREVET EUROPEEN

(45) Date de publication du fascicule du brevet :
**14.08.91 Bulletin 91/33**

(51) Int. Cl.⁵ : **A01B 13/08**

(21) Numéro de dépôt : **88450005.9**

(22) Date de dépôt : **29.01.88**

(54) **Dent pour le travail du sol et machine équipée d'une telle dent.**

(30) Priorité : **02.02.87 FR 8701306**

(43) Date de publication de la demande :
**24.08.88 Bulletin 88/34**

(45) Mention de la délivrance du brevet :
**14.08.91 Bulletin 91/33**

(84) Etats contractants désignés :
**AT BE CH DE ES FR GB GR IT LI LU NL SE**

(56) Documents cités :
**EP-A- 0 100 186**
**FR-A- 2 353 212**
**FR-A- 2 426 387**
**GB-A- 759 120**

(73) Titulaire : **SOCIETE TRASOL S.A.R.L.**
**Route de Cambernard**
**F-31470 Saint Lys (FR)**
Titulaire : **Michel, Marcel**
**"Lafontanelle" Montpezat d'Agenais**
**F-47360 Prayssas (FR)**

(72) Inventeur : **Michel, Marcel**
**Lafontanelle Montpezat D'Agenais**
**F-47360 Prayssas (FR)**

(74) Mandataire : **Ravina, Bernard**
**Cabinet Bernard RAVINA 24, boulevard Riquet**
**F-31000 Toulouse (FR)**

EP 0 279 761 B1

Jouve, 18, rue Saint-Denis, 75001 PARIS

## Description

La présente invention a pour objet un nouveau type de dent pour machine agricole et la machine agricole équipée de dents selon l'invention.

On sait que la matière organique du sol doit rester à faible profondeur de façon à pouvoir se décomposer dans de bonnes conditions et servir de support et d'aliment à la faune et à la microflore du sol, lesquelles produisent l'humus indispensable au maintien de la fertilité des sols.

Les machines agricoles actuelles présentent l'inconvénient de labourer trop profondément les sols et d'enfouir la matière organique à grande profondeur alors qu'elle devrait rester au voisinage de la surface.

Des labours trop profonds nécessitent des puissances très élevées qui ne peuvent être fournies que par des engins très lourds qui tassent les terrains.

En raison de cet inconvénient, il est nécessaire de pratiquer à la suite de ces labours des opérations de décompactage du sol et sous-sol.

Pour pallier à ces différents inconvénients, on a précédemment mis en oeuvre des dents élastiques terminées par un soc.

Une telle dent est notamment connue de la demande de brevet GB A 759.120.

La dent selon cette demande de brevet comprend un soc monté en extrémité inférieure d'une âme allongée flexible latéralement par rapport à la direction d'avancement dans la terre.

Grâce à sa flexibilité latérale, la dent peut suivre un trajet sinueux dans la terre mais ne provoque pas pour autant un fort ébranlement du sol.

On connaît également de la demande FR A 2353212 une dent sous soleuse vibrante.

Cette dent comporte une lame élastique terminée par un soc. La lame est courbée latéralement et le soc dont la dent est pourvue est orienté en sorte que sa pointe soit dirigée vers le bas.

Ainsi, lors de l'avancement dans le sol, la poussée de la terre sur le soc provoque un mouvement oscillatoire de la lame de haut en bas et de bas en haut.

De ce mouvement, il en résulte un soulèvement de la terre.

On connaît également de la demande EP A 0100186 une dent pour le travail de la terre comportant également une lame élastique terminée par un soc doté d'un aileron dirigée vers le haut afin que lors de l'avancement, se produise le soulèvement de la terre.

Il est apparu à l'usage que ces différents aménagements ne donnent pas les résultats escomptés.

La présente invention a pour objet la mise en oeuvre d'une nouvelle dent qui travaille le sol sans brassage important tout en l'ameublissant par ébranlement et fissurage.

A cet effet, la dent selon l'invention pour le travail du sol comporte une âme allongée élastique par l'une des extrémités de laquelle elle est destinée à être fixée au châssis d'un instrument agricole. La dent comporte également un soc fixé à l'autre extrémité de l'âme.

Cette âme présente un bord d'attaque longitudinal et un bord de fuite.

La dent telle que précédemment définie se caractérise essentiellement en ce qu'elle est dotée, immédiatement au-dessus du soc d'une face d'attaque destinée à être disposée de manière oblique par rapport à la direction d'avancement, que le soc présente une latitude de pivotement limité, au moins autour du bord de fuite de la dent, que ce pivotement s'effectue par torsion de l'âme et que la dite âme est moins flexible au niveau du bord de fuite qu'au niveau du bord d'attaque, la torsion de l'âme s'effectuant sous l'effet de la poussée de la terre lors de l'avancement.

D'autres avantages et caractéristiques de l'invention apparaitront à la lecture de la description d'une forme préférentielle de réalisation donnée à titre d'exemple non limitatif en se reférant aux dessins annexés en lesquels :

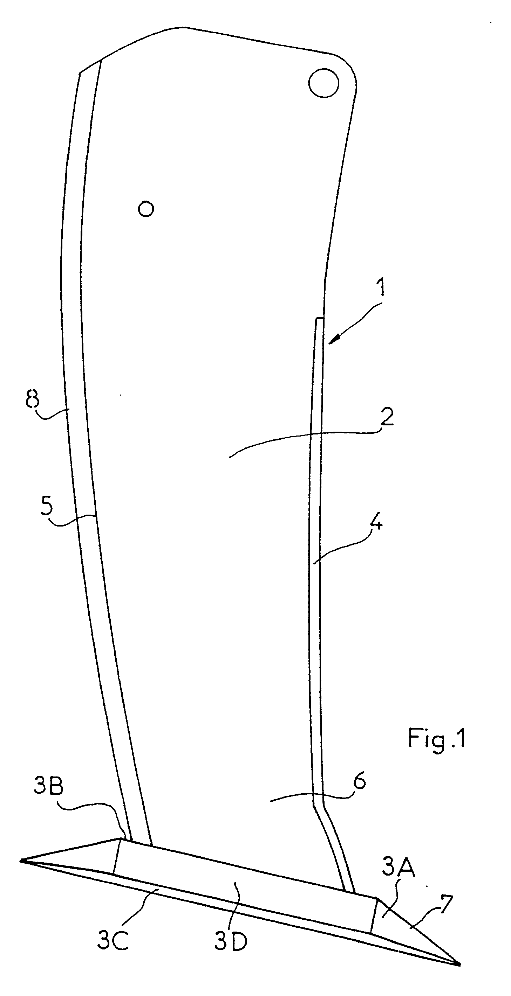

— la figure 1 est une vue de face de la dent,

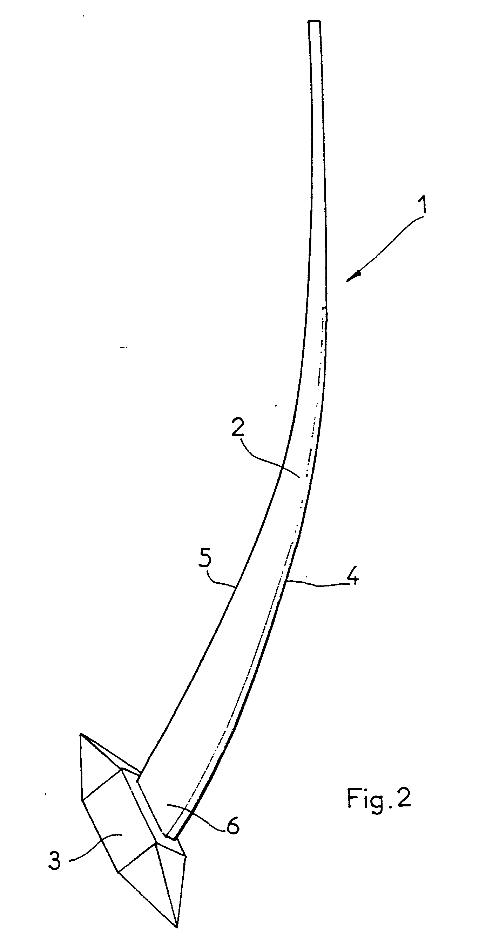

— la figure 2 est une vue de côté de la dent,

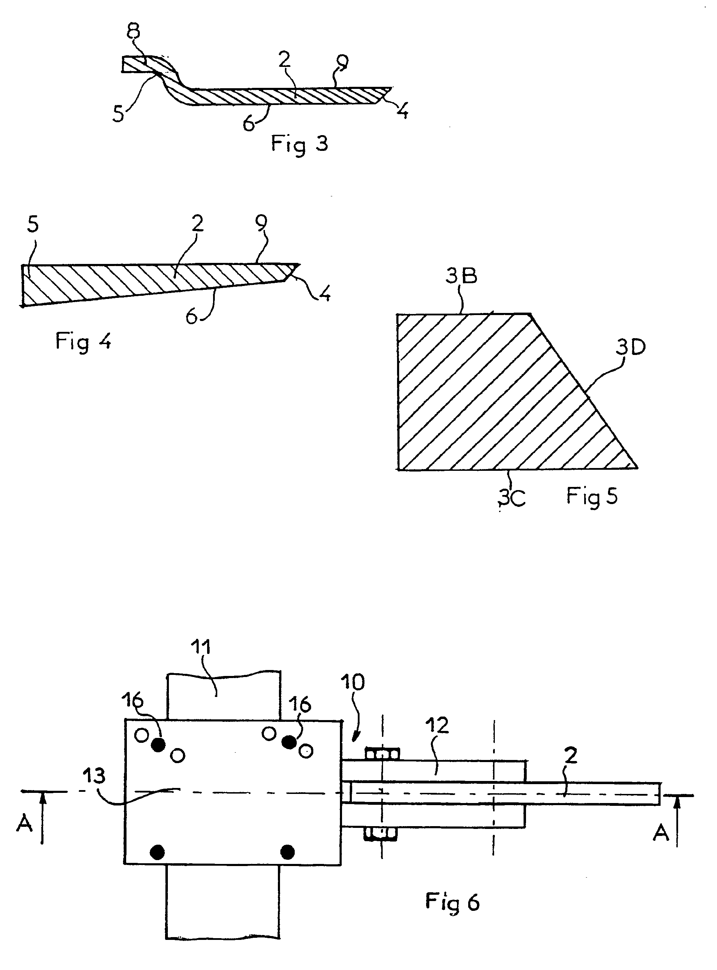

— la figure 3 est une vue en coupe transversale d'une première forme de réalisation de la dent,

— la figure 4 est une vue en coupe transversale d'une autre forme de réalisation de la dent,

— la figure 5 est une vue en coupe transversale du soc de la dent,

— la figure 6 est une vue de dessus de la bride de fixation de la dent,

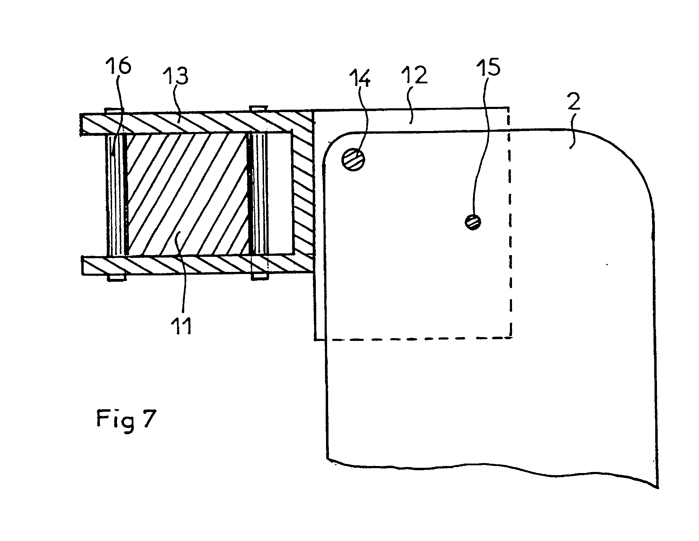

— la figure 7 est une vue en coupe selon la ligne AA de la figure 6.

Telle que représentée, la dent 1 selon l'invention, pour le travail du sol, comporte une âme allongée (2), métallique élastique, par une des extrémités de laquelle elle est destinée à être fixée au châssis d'un instrument agricole à l'aide d'une bride. La dent comporte également un soc 3, métallique, fixé à l'autre extrémité de l'âme 2.

L'âme de la dent comporte un bord d'attaque 4 longitudinal par lequel elle coupe la terre lors de la progression de l'instrument agricole et un bord de fuite 5 longitudinal opposé au précédent. Les bords 4 et 5 se développent au-dessus du soc 3. De préférence, le bord d'attaque est formé par un biseau longitudinal.

Conformément à l'invention, le soc possède un latitude de pivotement limité autour au moins du bord de fuite de la dent. Ce pivotement limité dans un sens ou dans l'autre s'effectue par torsion de l'âme de la dent sous l'effet de la poussée de la terre subie par la dent de sa progression dans le sol à travailler.

Les vibrations en résultant ou le simple pivotement alterné en résultant facilitent grandement l'ameublissement du sol par ébranlement et fissurage de ce dernier.

La dent ne provoque pratiquement pas de brassage de la terre et ainsi la matière organique reste à la profondeur adéquate.

A titre d'exemple, le soc pourra être constitué à partir d'un parallélépipède rectangle, en métal.

Selon la forme préférée de réalisation, le soc est monté de manière amovible en extrémité inférieure de la dent.

A cet effet, le soc, suivant son épaisseur, dans la zone médiane, à partir de la face supérieure 3B à la face inférieure 3C, est doté d'une lumière ou mortaise dans laquelle s'engage un tenon ménagé en extrémité inférieure de l'âme.

Pour immobiliser le tenon dans la mortaise, il est prévu un clavetage transversal.

De préférence, la pointe 7 du soc, en considérant le sens d'avancement de la dent, est situé en avant du bord d'attaque 4 de l'âme.

Ce soc présente au moins une face d'attaque 3A qui est destinée à être disposée de manière oblique par rapport à la direction d'avancement et qui est destinée à subir la poussée de la terre. La face d'attaque 3A du soc comprend une première facette oblique par rapport à l'axe longitudinal du soc.

Cette première facette taillée en biseau constitue la pointe du dit soc.

A la suite de cette première facette, la face d'attaque de soc comprend une deuxième facette 3D, plane.

Cette deuxième facette 3D est pratiquée de façon oblique à l'un quelconque des axes transversaux du soc et parallèlement à l'axe longitudinal.

Cette deuxième facette forme avec la face inférieure du soc une arête vive, latérale.

Selon une autre forme de réalisation, le soc possède une seconde pointe opposée à la première de façon à pouvoir être retourné après usure de la première.

De plus, le soc pourra être équipé de plaques d'usures venant constituer la pointe 7 et les différentes facettes. Ces plaques d'usures constituées en matériau dur (acier ou carbure ou autre matière) pourront être fixées par vissage au corps du soc.

Selon la forme préférée de réalisation, l'âme (2) de la dent, entre le bord d'attaque (4) et le bord de fuite (5), immédiatement au-dessus du soc (3), présente une face d'attaque (6) qui est destinée à être disposée de manière oblique par rapport à la direction d'avancement de la dent de façon à subir la poussée de la terre. Cette face d'attaque est parallèle à l'axe longitudinal du soc.

L'âme de la dent présente une flexibilité moins importante au niveau du bord de fuite que du bord d'attaque.

Ainsi, sous la poussée de la terre exercée sur la face oblique d'attaque et sur les faces d'attaque 3A du soc, l'âme fléchie de manière plus importante au niveau du bord d'attaque qu'au niveau du bord de fuite, ce qui crée un effet de torsion combiné à l'effet de flexion de l'âme.

De cet effet de torsion, il en résulte un pivotement limité du soc 3 et autour du bord de fuite 5.

Selon une forme préférée de réalisation, l'âme 2 présente une nervure longitudinale 8 s'étendant suivant toute la longueur du bord de fuite afin de diminuer la flexibilité de cette zone. Selon cette forme de réalisation, l'âme pourra présenter une épaisseur constante.

Toujours suivant cette forme de réalisation, la nervure de l'âme pourra être formée par repli de son bord de fuite suivant un axe longitudinal, ce repli étant formé de façon à ce que le dit bord soit en retrait par rapport à la face d'attaque 6.

Suivant une autre forme de réalisation, l'épaisseur de l'âme est plus importante au niveau du bord de fuite 5 qu'au niveau du bord d'attaque 4.

Selon une variante, l'épaisseur de l'âme est croissante du bord d'attaque au bord de fuite.

De préférence, afin de faciliter le travail de la terre, l'âme, immédiatement au-dessus du soc 3, en arrière du bord d'attaque, en considérant le sens d'avancement, présente une face de dépouille 9, cette face étant opposée à la face d'attaque.

Selon cette forme de réalisation, soit la nervure 8, soit le bord arrière est situé en saillie sur le plan contenant la face de dépouille 9.

De préférence, le biseau que forme le bord d'attaque est réalisé de façon à former un angle saillant avec la face de dépouille 9 de façon à accroître l'effet combiné de flexion et torsion de l'âme de la dent.

Selon une autre forme de réalisation, le biseau que forme le bord d'attaque est pratiqué de façon à former un angle saillant avec la face d'attaque de l'âme.

Comme dit précédemment, la poussée de la terre sur la face d'attaque du soc et de l'âme provoque également la flexion de la dite âme.

Selon la forme préférentielle de réalisation, la dent présente une flexibilité variable de son extrémité supérieure à son extrémité inférieure, laquelle porte le soc.

De préférence, la dent est moins flexible en extrémité supérieure qu'en extrémité inférieure.

A titre d'exemple, la dent présente un flexibilité croissante de l'extrémité supérieure à l'extrémité inférieure.

Selon une forme préférée de réalisation, la section transversale de l'âme est plus importante en extrémité supérieure qu'en extrémité inférieure.

Toujours, selon cette forme préférée de réalisation, la section transversale de l'âme est croissante de l'extrémité inférieure à l'extrémité supérieure.

Toujours suivant la forme préférée de réalisation, la section transversale de l'âme, à partir de la zone d'enracinement de la nervure jusqu'au bord d'attaque épouse sensiblement le contour d'un trapèze rectangle.

Le bord oblique de ce trapèze rectangle correspond au bord d'attaque de l'âme de la dent.

Avantageusement, la dent est conformée de façon à ce que les lignes longitudinales de l'âme soient courbées latéralement suivant un grand rayon de courbure et de façon à ce que la face d'attaque soit concave.

De préférence ce rayon de courbure est comprise entre 40 et 60 cm.

De cette façon, le partie inférieure de la dent, sous l'effet de la poussée de la terre qui s'exerce sur le soc 3 et sur le face d'attaque 6, peut se déployer par flexion et le soc peut pénétrer plus profondément dans le sol. Dés que la poussée de la terre sera moindre, le soc aura tendance à reprendre sa position initiale.

Selon une forme préférentielle de réalisation, la partie inférieure de la dent et le soc sont latéraux au plan géométrique suivant lequel est disposé la partie supérieure plane.

De plus, la face d'attaque de l'âme est oblique par rapport au plan contenant la partie supérieure.

La partie supérieure de la dent est plane et est destinée à coopérer avec une bride de fixation au châssis de la machine. La dent se monte de préférence sur le châssis de la machine de façon à ce que le plan contenant la partie supérieure soit disposé suivant la direction d'avancement mais il est bien évident qu'il pourra être disposé de manière oblique de façon à modifier l'effet de la dent lors du travail de la terre.

A titre purement indicatif, l'âme de la dent présente une longueur de 90 cms, mesurée suivant la ligne médiane. Le tiers supérieur de la dent se développe suivant un plan. La partie inférieure de la dent suivant environ 1/10 de la longueur de l'âme, se développe également suivant un plan. L'angle formé par l'intersection de ces deux plans est compris dans un fourchette de 140 à 155°.

Le soc par rapport à la ligne médiane de l'âme est incliné d'environ 110°.

L'axe longitudinal du soc coupe le plan géométrique contenant la partie supérieure de la dent suivant un angle d'environ 10°. L'angle saillant formé par la facette 3A et la face inférieure 3C du soc est compris entre 30° et 40°.

Comme dit précédemment les dents sont fixées chacune par une bride 10 au chassis de la machine. Plus particulièrement, ces dents 1 par leur bride, sont fixées aux traverses 11 de ce châssis, ces traverses étant transversales à la direction d'avancement de la machine.

Selon une forme préférée de réalisation, chaque bride comprend une chape 12 à ailes verticales définissant un logement vertical dans lequel est monté en fixation l'extrémité supérieure de l'âme 2 de la dent 1.

La bride 10 est composée d'une seconde chape 13 destinée à venir enserrer la traverse 11, les ailes horizontales de cette seconde chape définissant un logement horizontal. Les deux chapes 12 et 13 sont fixées l'une à l'autre par leur dos.

La bride est destinée à être montée sur la machine de façon à ce que la première chape 12 soit en arrière de la seconde en considérant le sens d'avancement normal de la machine.

La première chape 12 de la bride reçoit des organes de fixation de la dent.

Selon une forme préférée de réalisation, la dent est fixée dans la chape par un boulon 14 et par une goupille de sécurité 15. Le boulon et la goupille sont engagés chacun dans une série de trois orifices axialement alignés traversant respectivement, suivant leur épaisseur, la première aile de la chape, l'âme de la dent et la seconde aile de la chape.

La goupille de sécurité, de section calibrée, est destinée à se rompre lorsque les efforts exercés sur la dent sont trop importants et peuvent conduire à la détérioration du soc 3 ou de l'âme. C'est notamment le cas lorsque un obstacle dans le sol s'oppose à l'avancement de la dent.

La goupille 15 en se rompant libère la dent qui peut alors pivoter autour de l'axe du boulon et s'effacer devant l'ostacle.

Avantageusement, les ailes de la chape sont percées de plusieurs séries d'orifices pour le boulon et pour la goupille de façon à pouvoir ajuster l'inclinaison de la dent 1 et donc l'inclinaison du soc 3 dans le sol, en fonction et de la nature du terrain et de son état (sec, humide, etc...).

Avantageusement, la second chape 13 de la bride est équipée de quatre boulons 16 qui viennent se disposer deux par deux de part et d'autre de la traverse 11, de façon à immobiliser la bride en rotation autour de l'axe longitudinal de la traverse et autour d'un axe vertical sécant au précédent.

Pour immobiliser la bride le long de la traverse, il pourra être prévu des vis pression qui sont engagés en vissage dans un orifice taraudé pratiqué dans une aile de la chape et qui coopèrent en pression avec la traverse. Les boulons 16 de la seconde chape 13 sont engagés chacun dans une série de deux orifices axialement alignés, traversant de part en part, suivant leur épaisseur, respectivement la première aile de la chape 13 et la seconde aile.

Selon une forme préférentielle de réalisation, la bride 10 est équipée d'un moyen pour ajuster l'angle d'attaque du soc par pivotement autour d'un axe vertical.

Selon une forme préférée de réalisation, à au moins deux boulons 16 de la seconde chape, sont associées plusieurs séries d'orifices, ce qui autorise différentes positions angulaires de la seconde chape par rapport à la traverse 11 et permet d'ajuster l'angle d'attaque de la dent.

Avantageusement, le châssis de la machine est doté de plusieurs rangées de dents.

Chaque rangée est transversale à la direction d'avancement. Les dents, d'une rangée à l'autre sont disposées en quinquonce. De plus, afin d'éviter un effet parasite de traction latérale au sens d'avancement de la machine, le châssis sera équipé en nombre égal de dents courbées latéralement dans un sens et de dents courbées latéralement dans l'autre.

## Revendications

1. Dent (1) pour le travail du sol comportant une âme (2) allongée, élastique par une des extrémités de laquelle elle est destinée à être fixée au châssis d'un instrument agricole et un soc (3) fixé à l'autre extrémité de l'âme (2), cette âme présentant un bord longitudinal (4) d'attaque de la terre formé par un biseau et un bord longitudinal de fuite (5) caractérisée en ce qu'elle est dotée, immédiatement au-dessus du soc (3) d'une face d'attaque (6) destinée à être disposée de manière oblique par rapport à la direction d'avancement, que le soc (3) présente une latitude de pivotement limité, au moins autour du bord de fuite (5) de la dent, que ce pivotement s'effectue par torsion de l'âme (2) et que la dite âme (2) est moins flexible au niveau du bord de fuite (5) qu'au niveau du bord d'attaque (4), la torsion de l'âme s'effectuant sous l'effet de la poussée de la terre lors de l'avancement.

2. Dent pour le travail de la terre selon la revendication 1 caractérisée en ce que le bord de fuite (5) de la dent est doté d'une nervure (8).

3. Dent pour le travail de la terre selon la revendication 1 caractérisée en ce que l'épaisseur de l'âme (2) est plus importante au niveau du bord de fuite (5) qu'au niveau du bord d'attaque (4).

4. Dent pour le travail de la terre selon la revendication 1 caractérisée en ce qu'elle présente immédiatement au-dessus du soc (3) à l'opposé de la face d'attaque, une face de dépouille (9).

5. Dent pour le travail de la terre selon les revendications 1 et 4 présentant un bord d'attaque (4) formé par un biseau, caractérisée en ce que le dit biseau et la face de dépouille (9) forment un angle saillant.

6. Dent pour le travail de la terre selon les revendications 2 et 4 caractérisée en ce que la nervure (8) est en saillie sur le plan contenant la face de dépouille (9).

7. Dent pour le travail de la terre selon la revendication 1 caractérisée en ce qu'elle est courbée latéralement suivant un grand rayon de courbure, sa face d'attaque (6) étant concave.

8. Dent pour le travail de la terre selon la revendication 1 caractérisée en ce que le soc présente une face (3A) constituée par une première facette formant la pointe (7) du soc et par une seconde facette (3D) latérale formant avec la face inférieure (3C) du soc une arête vive.

9. Dent selon la revendication 1 comportant une bride (10) de fixation à une des traverses (11) du châssis d'une machine caractérisée en ce que la dite bride (10) comporte un moyen pour ajuster l'angle d'attaque du soc (3) par pivotement autour d'un axe vertical.

10. Dent selon la revendication 1 caractérisée en ce que le soc (3) est disposé de manière oblique par rapport à la ligne médiane de l'âme, la pointe étant dirigée vers le bas.

11. Machine pour le travail de la terre caractérisée en ce qu'elle est dotée d'au moins une dent selon les revendications 1 à 13.

## Patentansprüche

1. Zahn (1) zur Bodenbearbeitung, aus einem elastischen, länglichen Kern (2), über dessen eines Ende er an dem Chassis eines landwirtschaftlichen Werkzeugs angebracht wird, und aus einer Schar (3), die an dem anderen Ende des Kerns (2) befestigt ist, wobei dieser Kern einen von einer Schrägkante gebildeten Längsrand (4) zum Zerteilen des Bodens, und einen hinteren Längsrand (5) aufweist, dadurch gekennzeichnet, daß er unmittelbar über der Schar (3) mit einer vorderen Fläche (6) versehen ist, die schräg zu der Richtung der Vorwärtsbewegung angeordnet wird, daß die Schar einen begrenzten Schwenkbereich aufweist, zumindest um den hinteren Rand (5) des Zahns herum, daß diese Schwenkung durch Torsion des Kerns (2) erfolgt, und daß der besagte Kern (2) im Bereich des hinteren Randes (5) weniger flexibel ist als im Bereich des vorderen Randes (4), wobei die Torsion des Kerns durch den Druck des Bodens bei der Vorwärtsbewegung hervorgerufen wird.

2. Zahn zur Bodenbearbeitung gemäß Anspruch 1, dadurch gekennzeichnet, daß der hintere Rand (5) des Zahns mit einer Rippe (8) versehen ist.

3. Zahn zur Bodenbearbeitung gemäß Anspruch 1, dadurch gekennzeichnet, daß die Dicke des Kerns (2) im Bereich des hinteren Randes (5) größer ist als im Bereich des vorderen Randes (4).

4. Zahn zur Bodenbearbeitung gemäß Anspruch 1, dadurch gekennzeichnet, daß er unmittelbar über der Schar (3) gegenüber der vorderen Fläche eine zurückgenommene fläche (9) aufweist.

5. Zahn zur Bodenbearbeitung gemäß Anspruch 1 und 4, der einen von einer Schrägkante gebildeten vorderen Rand (4) aufweist, dadurch gekennzeichnet, daß die besagte Schrägkante und die zurückgenommene Fläche (9) eine vorspringende Ecke bilden.

6. Zahn zur Bodenbearbeitung gemäß Anspruch 2 und 4, dadurch gekennzeichnet, daß die Rippe (8) bezüglich der Ebene, die die zurückgenommene Fläche (9) enthält, vorspringt.

7. Zahn zur Bodenbearbeitung gemäß Anspruch 1, dadurch gekennzeichnet, daß er gemäß einem großen Krümmungsradius seitlich gekrümmt ist, wobei seine vordere Fläche (6) konkav ist.

8. Zahn zur Bodenbearbeitung gemäß Anspruch 1, dadurch gekennzeichnet, daß die Schar eine Fläche (3A) aufweist, aus einer ersten Facette, die die Spitze (7) der Schar bildet, und aus einer zweiten, seitlichen Facette (3D), die mit dar unteren FLÄCHE (3C) der Schar eine scharfe Kante bildet.

9. Zahn gemäß Anspruch 1, der einen Flansch (10) zur Befestigung an einer der Traversen (11) des Chassis einer Maschine aufweist, dadurch gekennzeichnet, daß der besagte Flansch (10) ein Mittel aufweist, um den Anstellwinkel der Schar (3) durch Drehung um eine vertikale Achse einzustellen.

10. Zahn gemäß Anspruch 1, dadurch gekennzeichnet, daß die Schar (3) schräg zu der Mittellinie des Kerns angeordnet ist, wobei die Spitze nach unten gerichtet ist.

11. Maschine zur Bodenbearbeitung, dadurch gekennzeichnet, daß sie mit mindestens einem Zahn gemäß Anspruch 1 bis 13 versehen ist.

## Claims

1. Tooth (1) for working earth including an extended web (2), made flexible at one of the ends by which it is designed for attachment to the frame of an agricultural tool and a ploughshare (3) secured to the other end of the web (2). This web has a longitudinal leading edge (4) for working earth made up with a bevel and a longitudinal trailing edge (5) characterized by the fact that it is provided, immediately above the ploughshare (3) with a leading side (6) intended to be placed obliquely in relation to the direction of movement, and that the ploughshare (3) has a limited swivel latitude, at least around the trailing edge (5) of the tooth, that this swivel is via twisting of the web (2) and that the said web (2) is less flexible at the trailing edge (5) than at the leading edge (4). Web twisting is under the effect of the thrust provided by the earth during forward movement.

2. Tooth for working earth according to claim 1 characterized by the fact that the trailing edge (5) of the tooth is provided with a rib (8).

3. Tooth for working earth according to claim 1 characterized by the fact that the thickness of the web (2) is greater at the trailing edge (5) than at the leading edge (4).

4. Tooth for working earth according to claim 1 characterized by the fact that it has, immediately above the ploughshare (3) opposite the leading edge, a raked side (9).

5. Tooth for working earth according to claim 1 and 4 with a leading edge (4) consisting of a bevel, characterized by the fact that this bevel and the raked side (9) form a protruding angle.

6. Tooth for working earth according to claim 2 and 4 characterized by the fact that the rib (8) protrudes in the plane containing the raked side (9).

7. Tooth for working earth according to claim 1 characterized by the fact that it is curved laterally as per a wide curve radius with its leading edge (6) concave.

8. Tooth for working earth according to claim 1 characterized by the fact that the ploughshare has a side (3A) consisting of a first facet forming the point (7) of the ploughshare and by a second lateral facet (3D) forming, with the lower side (3C) of the ploughshare, a sharp edge.

9. Tooth according to claim 1 including a flange (10) for attachment to a transverse member (11) of the frame of a machine characterized by the fact that the said flange (10) includes a means for adjusting the angle of attack of the ploughshare (3) by swivelling around a vertical axis.

10. Tooth according to claim 1 characterized by the fact that the ploughshare (3) is placed so as to be oblique in relation to the center line of the web, the points being directed downwards.

11. Machine for working earth characterized by the fact that it is provided with at least one tooth in accordance with claims 1 to 13.

Fig.1

Fig.2

8

2
9

5
6
4

Fig 3

5
2
9

6
4

Fig 4

3B
3D

3C
Fig 5

11

16
16
10
12

13
2

A
A

Fig 6

Fig 7